(19) Europäisches Patentamt
European Patent Office
Office européen des brevets

(11) **EP 4 414 814 B1**

(12) **EUROPEAN PATENT SPECIFICATION**

(45) Date of publication and mention
of the grant of the patent:
**06.08.2025 Bulletin 2025/32**

(21) Application number: **24156305.5**

(22) Date of filing: **07.02.2024**

(51) International Patent Classification (IPC):
*G06F 3/01* (2006.01)        *G06T 17/00* (2006.01)
*G06T 17/20* (2006.01)       *G06T 19/00* (2011.01)
*H04N 13/111* (2018.01)      *H04N 13/117* (2018.01)
*H04N 13/268* (2018.01)      *H04N 13/271* (2018.01)
*G06T 15/40* (2011.01)

(52) Cooperative Patent Classification (CPC):
**G06F 3/013; G06F 3/011; G06F 3/012; G06T 17/00;
G06T 17/20; G06T 19/006;** G06T 15/405

(54) **TEMPORAL BLENDING OF DEPTH MAPS**

ZEITLICHES MISCHEN VON TIEFENKARTEN

MÉLANGE TEMPOREL DE CARTES DE PROFONDEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.02.2023 US 202363444094 P**

(43) Date of publication of application:
**14.08.2024 Bulletin 2024/33**

(73) Proprietor: **Apple Inc.
Cupertino, CA 95014 (US)**

(72) Inventors:
• **MEILLAND, Maxime
San Jose (US)**
• **LI, Mengxin
Bellevue (US)**
• **CHUANG, Ming
Bellevue (US)**

(74) Representative: **COPA Copenhagen Patents
Rosenvængets Allé 25
2100 Copenhagen Ø (DK)**

(56) References cited:
**US-A1- 2017 272 724    US-A1- 2021 358 084**

## Description

## TECHNICAL FIELD

The present disclosure generally relates to systems, methods, and devices for determining a depth map.

## BACKGROUND

In various implementations, an extended reality (XR) environment is presented by a head-mounted device (HMD). Various HMDs include a scene camera that captures an image of the physical environment in which the user is present (e.g., a scene) and a display that displays the image to the user. In some instances, this image or portions thereof can be combined with one or more virtual objects to present the user with an XR experience. In other instances, the HMD can operate in a pass-through mode in which the image or portions thereof are presented to the user without the addition of virtual objects. Ideally, the image of the physical environment presented to the user is substantially similar to what the user would see if the HMD were not present. However, due to the different positions of the eyes, the display, and the scene camera in space, this may not occur, resulting in impaired distance perception, disorientation, and poor hand-eye coordination.

US 2021/358084 A1 discloses a method to generate a 3D representation of the environment from depth maps captured by the frontal cameras of a head-mounted display (HMD). From the captured depth maps, interpolated depth maps are computed by weighted average of two depth maps having different time stamps.

## BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.

Figure 1 is a block diagram of an example operating environment in accordance with some implementations.

Figure 2 is a block diagram of an example depth map generator in accordance with some implementations.

Figure 3 is a flowchart representation of generating a depth map in accordance with some implementations.

Figure 4 is a block diagram of an example controller in accordance with some implementations.

Figure 5 is a block diagram of an example electronic device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

## SUMMARY

Various implementations disclosed herein include devices, systems, and methods for generating a depth map. In various implementations, the method is performed by a device including one or more processors and non-transitory memory. The method includes storing a first mesh of a physical environment in a first mesh buffer and a second mesh of the physical environment in a second mesh buffer. The method includes rendering a first depth map for an image of the physical environment based on the first mesh and a second depth map for the image of the physical environment based on the second mesh. The method includes generating a blended depth map based on the first depth map, the second depth map, and a difference between a time of the image of the physical environment and a time of the second mesh.

In accordance with some implementations, a device includes one or more processors, a non-transitory memory, and one or more programs; the one or more programs are stored in the non-transitory memory and configured to be executed by the one or more processors. The one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

## DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example implementations described herein.

As described above, in an HMD with a display and a scene camera, the image of the physical environment presented to the user on the display may not always reflect what the user would see if the HMD were not present due to the different positions of the eyes, the display, and the scene camera in space. In various circumstances, this results in poor distance perception, disorientation of the user, and poor hand-eye coordination, e.g., while interacting with the physical environment. Thus, in various implementations, images from the scene camera are transformed such that they appear to have been captured at the location of the user's eyes using a depth map representing, for each pixel of the image, the distance from the scene camera to the object represented by the pixel. However, sudden changes in the depth map may result in disadvantageous sudden shifts of objects (including real objects and/or virtual objects) in the transformed image.

In various implementations, the depth map is determined based on rendering a mesh of the physical environment. In various implementations, a mesh includes a plurality of points in a three-dimensional coordinate system of the physical environment and vertices between the points. Based on the pose of the scene camera, the mesh can be rendered to form a depth map. When the mesh is suddenly updated (e.g., due to entering a new room of the physical environment or moving furniture in the physical environment), the resulting depth map is suddenly changed resulting in sudden shifts in objects in the transformed image. Accordingly, in various implementations, the depth map resulting from rendering a first mesh obtained at a first time is temporally blended with the depth map resulting from rendering a second mesh obtained at a second, later time.

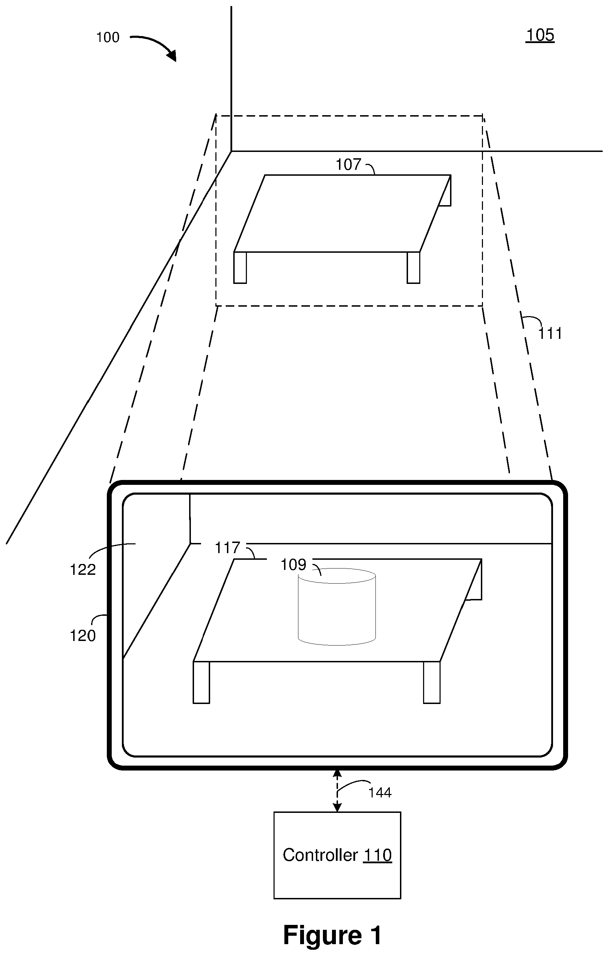

Figure 1 is a block diagram of an example operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 110 and an electronic device 120.

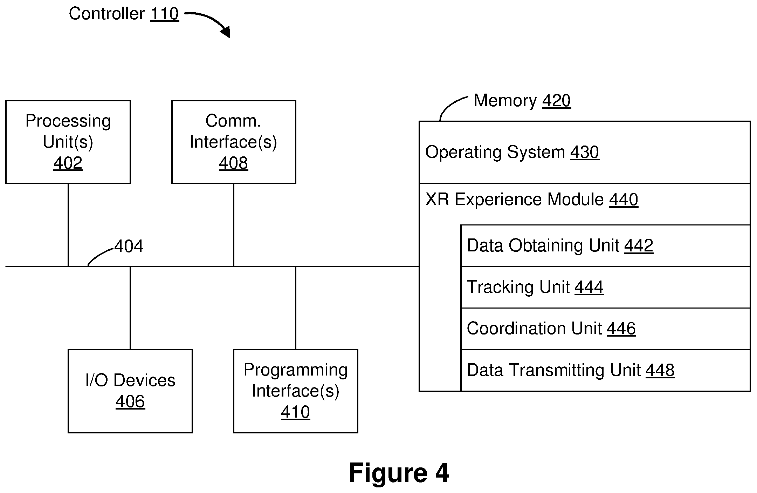

In some implementations, the controller 110 is configured to manage and coordinate an XR experience for the user. In some implementations, the controller 110 includes a suitable combination of software, firmware, and/or hardware. The controller 110 is described in greater detail below with respect to Figure 4. In some implementations, the controller 110 is a computing device that is local or remote relative to the physical environment 105. For example, the controller 110 is a local server located within the physical environment 105. In another example, the controller 110 is a remote server located outside of the physical environment 105 (e.g., a cloud server, central server, etc.). In some implementations, the controller 110 is communicatively coupled with the electronic device 120 via one or more wired or wireless communication channels 144 (e.g., BLUETOOTH, IEEE 802.11x, IEEE 802.16x, IEEE 802.3x, etc.). In another example, the controller 110 is included within the enclosure of the electronic device 120. In some implementations, the functionalities of the controller 110 are provided by and/or combined with the electronic device 120.

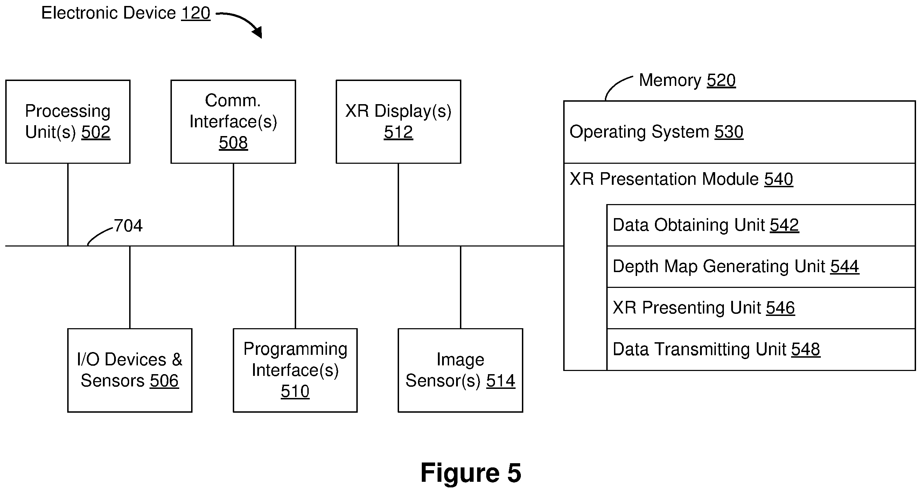

In some implementations, the electronic device 120 is configured to provide the XR experience to the user. In some implementations, the electronic device 120 includes a suitable combination of software, firmware, and/or hardware. According to some implementations, the electronic device 120 presents, via a display 122, XR content to the user while the user is physically present within the physical environment 105 that includes a table 107 within the field-of-view 111 of the electronic device 120. As such, in some implementations, the user holds the electronic device 120 in his/her hand(s). In some implementations, while providing XR content, the electronic device 120 is configured to display an XR object (e.g., an XR cylinder 109) and to enable video passthrough of the physical environment 105 (e.g., including a representation 117 of the table 107) on a display 122. The electronic device 120 is described in greater detail below with respect to Figure 5.

According to some implementations, the electronic device 120 provides an XR experience to the user while the user is virtually and/or physically present within the physical environment 105.

In some implementations, the user wears the electronic device 120 on his/her head. For example, in some implementations, the electronic device includes a head-mounted system (HMS), head-mounted device (HMD), or head-mounted enclosure (HME). As such, the electronic device 120 includes one or more XR displays provided to display the XR content. For example, in various implementations, the electronic device 120 encloses the field-of-view of the user. In some implementations, the electronic device 120 is a handheld device (such as a smartphone or tablet) configured to present XR content, and rather than wearing the electronic device 120, the user holds the device with a display directed towards the field-of-view of the user and a camera directed towards the physical environment 105. In some implementations, the handheld device can be placed within an enclosure that can be worn on the head of the user. In some implementations, the electronic device 120 is replaced with an XR chamber, enclosure, or room configured to present XR content in which the user does not wear or hold the electronic device 120.

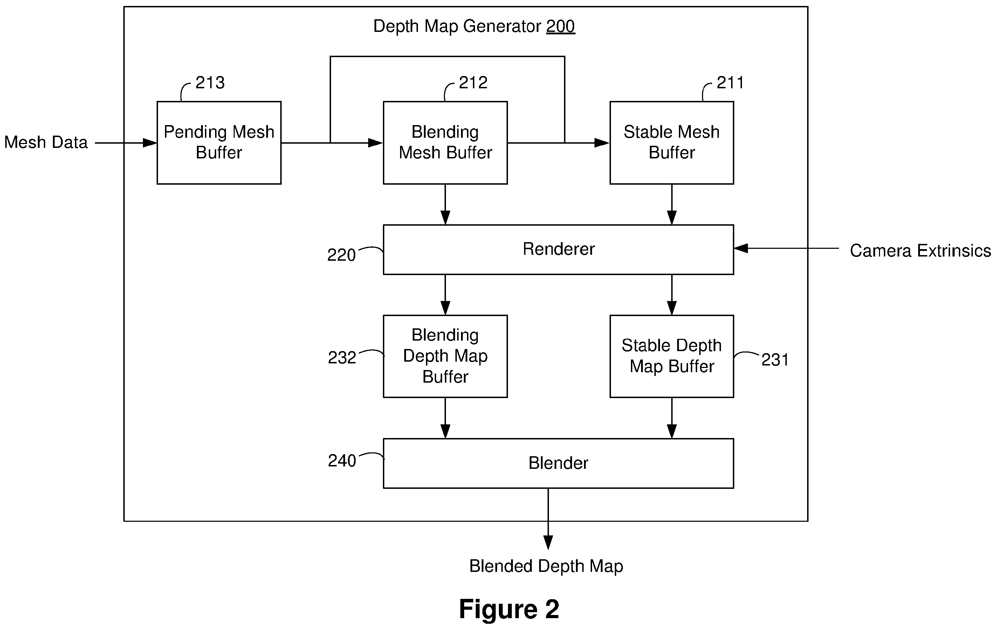

Figure 2 illustrates a depth map generator 200 in accordance with some implementations. The depth map generator 200 receives mesh data and outputs a blended depth map for an image captured by an image sensor. To that end, the depth map generator 200 further receives camera extrinsics for the image, such as a pose of the image sensor.

The depth map generator 200 includes a stable mesh buffer 211, a blending mesh buffer 212, and a pending mesh buffer 213. Upon initialization, the stable mesh buffer 211, the blending mesh buffer 212, and the pending mesh buffer 213 are empty.

The depth map generator 200 includes a renderer 220 which, using the camera extrinsics, reads the stable mesh buffer 211 to generate a stable depth map and write the stable depth map to a stable depth map buffer 231 and reads the blending mesh buffer 212 to generate a blending depth map and write the blending depth map to a blending depth map buffer 232. Upon initialization, because the stable mesh buffer 211 and the blending mesh buffer 212 are empty, the stable depth map and the blending depth map have the value of infinity for each pixel of the image.

The depth map generator 200 includes a blender 240 that reads the stable depth map from the stable depth map buffer 231 and the blending depth map from the blending depth map buffer 232 to generate and output the blended depth map. In various implementations, an inverse of the blended depth map is a weighted sum of an inverse of the stable depth map and an inverse of the blending depth map. For example, where $d_{stable}$ is the depth value for a particular pixel of the stable depth map, $d_{blending}$ is the depth value for the particular pixel of the blending depth map:

$$1/d_{blended} = 1/d_{blending}*\alpha + 1/d_{stable}*(1-\alpha),$$

where $d_{blended}$ is the depth value for the particular pixel of the blended depth map and $\alpha$ is a weighting factor.

In various implementations, the weighting factor is a function of a difference between a timestamp of the image and a timestamp of the blending mesh buffer 212. In various implementations, the weighting factor is a function of a blending time period. In various implementations, the blending time period is 1 second, 2 seconds, 5 seconds, 10 seconds, 20 seconds, 30 seconds, 1 minute, or any time period. For example, in various implementations, where $t_{image}$ is a timestamp of the image, $t_{blending}$ is a timestamp of the blending mesh buffer 212, and $T_{blend}$ is a blending time period:

$$\alpha = (t_{image} - t_{blending})/T_{blend}.$$

As noted above, upon initialization, the stable mesh buffer 211, the blending mesh buffer 212, and the pending mesh buffer 213 are empty. However, each time mesh data is received by the depth map generator 200, the pending mesh stored in the pending mesh buffer 213 is updated and a timestamp of the pending mesh buffer 213 is updated to a current time. In various implementations, updating the pending mesh includes adding the received mesh data to the pending mesh. In various implementations, updating the pending mesh includes overwriting at least a portion of the pending mesh.

In various implementations, in response to detecting an update trigger, the stable mesh in the stable mesh buffer 211 is overwritten with the blending mesh in the blending mesh buffer 212 and the blending mesh in the blending mesh buffer 212 is overwritten with the pending mesh in the pending mesh buffer 213. Further, the timestamp of the blending mesh buffer 212 is updated to the timestamp of the pending mesh buffer 213.

In various implementations, the update trigger includes a temporal update trigger detected when an update clock (which is set to zero at initialization and in response to an update trigger) exceeds the blending time period ($T_{blend}$). In various implementations, the update trigger includes a motion-based update trigger detected due to motion of the device (e.g., motion of user's head). For example, when a user is moving his or her head, the user is less likely to notice sudden shifts of objects in the displayed image. In various implementations, the update trigger includes an eye-based update trigger detected during a blink (or a blink lasting at least a threshold amount of time) or a saccade of the user. In various implementations, the update trigger includes a content-based trigger detected based on displayed virtual content. For example, if a virtual explosion is rendered, the user is less likely to notice sudden shifts of objects in the displayed image.

As an example in which only temporal update triggers are detected, the stable mesh buffer 211 and the blending mesh buffer 212 are empty between an initialization time ($T_0$) and a first time equal to a blending time period after the initialization time ($T_1=T_0+T_{blend}$). At the first time, the blended depth map has a value of infinity for each pixel. At the first time, the stable mesh buffer 211 is overwritten with the blending mesh and the blending mesh buffer 212 is overwritten with a first mesh from the pending mesh buffer 213. Thus, at the first time, the stable mesh buffer 211 is empty and the blending mesh buffer 212 stores the first mesh. At the first time, the blended depth map has a value of infinity for each pixel. Between the first time and a second time equal to a blending time period after the first time ($T_2=T_1+T_{blend}$), the blended depth map transitions from infinity to first values based on the first mesh. At the second time, the stable mesh buffer 211 is overwritten with the first mesh and the blending mesh buffer 212 is overwritten with a second mesh from the pending mesh buffer 213. Thus, at the first time, the stable mesh buffer 211 stores the first mesh and the blending mesh buffer 212 stores the second mesh. Between the second time and a third time equal to a blending time period after the first time ($T_3=T_2+T_{blend}$), the blended depth map transitions from the first values to second values based on the second mesh. The depth map values transition continuously between initialization and the third time, even at the first time and second time. Accordingly, sudden shifts in the locations of objects in the displayed image are not perceived.

In various implementations, an update trigger is suppressed in response to determining that the pending mesh in the pending mesh buffer 213 is unstable. For example, if the pending mesh has changed more than a threshold amount during the blending time period, the update trigger may be suppressed for a particular amount of time. In such instances, the weighting factor may be set to 1 during the suppression.

In various implementations, it may be determined that the pending mesh overwritten into the blending mesh buffer 212 (e.g., the current blending mesh) is unstable after the transition has begun. In various implementations, the transition of the weighting factor from 0 to 1 is reversed until the weighting factor is 0 and the blending mesh buffer 212 is overwritten with the current, potentially more stable, pending mesh in the pending mesh buffer 213.

In various implementations, the depth map generator 200 performs a partial update in which portions of the stable mesh and/or the blending mesh outside a user field-of-view are updated without detecting an update trigger. For example, in various implementations, portions of the stable mesh in the stable mesh buffer 211 not used by the renderer 220 to generate the stable depth map are overwritten by the corresponding portions of the blending mesh in the blending mesh buffer 212. As another example, in various implementations, portions of the stable mesh in the stable mesh buffer 211 and the portions of the blending mesh in the blending mesh buffer 212 not used by the renderer 220 to generate the stable depth map and the blending depth map are overwritten by the corresponding portions of the pending mesh in the pending mesh buffer 213. Similarly, in various implementations, the depth map generator 200 performs a partial update in which portions of the stable mesh and/or the blending mesh occluded by virtual content are updated without detecting an update trigger.

In various implementations, in response to such a partial update, the timestamp of the blending mesh buffer 212 is updated to the timestamp of the pending mesh buffer 213. In various implementations, in response to such a partial update, the timestamp of the blending mesh buffer 212 is unchanged. In various implementations, in response to such a partial update the update clock is reset to zero. In various implementations, in response to such a partial update, the update clock is unchanged.

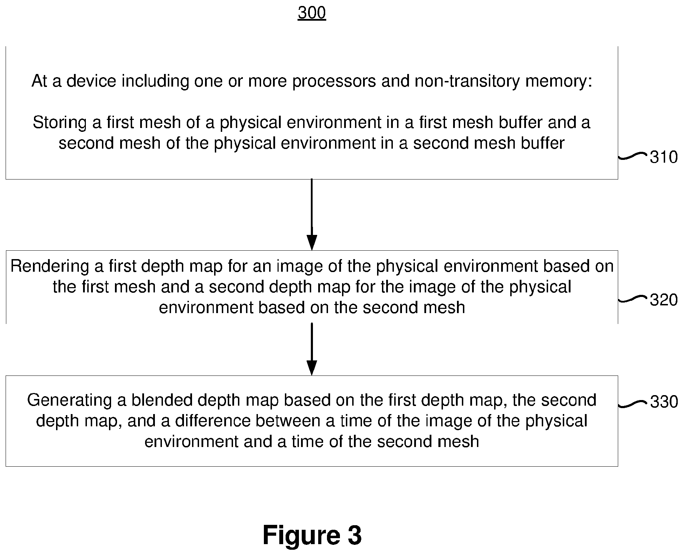

Figure 3 is a flowchart representation of a method of generating a depth map in accordance with some implementations. In various implementations, the method 300 is performed by a device with one or more processors and non-transitory memory (e.g., the electronic device 120 of Figure 1). In some implementations, the method 300 is performed by processing logic, including hardware, firmware, software, or a combination thereof. In some implementations, the method 300 is performed by a processor executing instructions (e.g., code) stored in a non-transitory computer-readable medium (e.g., a memory).

The method 300 begins, in block 310, with the device storing a first mesh of a physical environment in a first mesh buffer and a second mesh of the physical environment in a second mesh buffer. For example, in Figure 2, the stable mesh buffer 211 stores a first mesh of the physical environment and the blending mesh buffer 212 stores a second mesh of the physical environment.

The method 300 continues, in block 320, with the device rendering a first depth map for an image of the physical environment based on the first mesh and a second depth map for an image of the physical environment based on the second mesh. For example, in Figure 2, the renderer 220 renders a stable depth map based on the first mesh in the stable mesh buffer 211 and a blending depth map based on the second mesh in the blending mesh buffer 212. In various implementations, rendering the first depth map and/or the second depth map is based on camera extrinsics of an image sensor that captured the image of the physical environment, such as a pose of the image sensor at a time the image of the physical environment was captured.

The method 300 continues, in block 330, with the device generating a blended depth map based on the first depth map, the second depth map, and a difference between a time of the image of the physical environment and a time of the second mesh. For example, in Figure 2, the blender 240 generates a blended depth map based stored in the stable depth map in the stable depth map buffer 231, the blending depth map stored in the blending depth map buffer 232, and a difference between a time of the image of the physical environment and a timestamp of the blending mesh buffer 212.

In various implementations, generating the blended depth map includes generating a weighted sum of an inverse of the first depth map and an inverse of the second depth map, wherein a weighting factor of the weighted sum is proportional to the difference between a time of the image of the physical environment and a time of the second mesh.

In various implementations, the method 300 further includes, in response to detecting an update trigger, overwriting the first mesh buffer with the second mesh and overwriting the second mesh buffer with a third mesh stored in a third mesh buffer. For example, in Figure 2, in response to an update trigger, the depth map generator 200 overwrites the stable mesh buffer 211 with the mesh in the blending mesh buffer 212 and overwrites the blending mesh buffer 212 with the mesh in the pending mesh buffer 213.

In various implementations, the update trigger includes a temporal trigger detected when a threshold amount of time has elapsed since initialization or a most recent update trigger. For example, in various implementations, the temporal update trigger is detected when an update clock (which is set to zero at initialization and in response to an update trigger) exceeds the blending time period ($T_{blend}$). In various implementations, the update trigger includes a motion-based trigger detected based on motion of the device. For example, in various implementations, the motion-based update trigger is detected when a velocity of the device exceeds a threshold velocity (in various implementations, for at least a threshold amount of time). In various implementations, the update trigger includes an eye-based trigger detected based on an eye characteristic of a user. For example, in various implementations, the eye-based trigger is detected when the user blinks (in various implementations, for at least a threshold amount of time) or performs a saccade. In various implementations, the update trigger includes a content-based trigger detected based on virtual content displayed by the device. For example, in various implementations, the content-based trigger is detected when the virtual content includes a bright flash or substantially occludes the representation of the physical environment.

In various implementations, the method 300 includes updating the third mesh buffer in response to receiving mesh data. For example, in Figure 2, in response to receiving mesh data, the depth map generator 200 updates the mesh in the pending mesh buffer 213, which may include adding points and/or vertices and/or overwriting points and/or vertices.

In various implementations, the method 300 includes, in response to detecting a subsequent update trigger, overwriting the first mesh buffer with the third mesh and overwriting the second mesh buffer with a fourth mesh stored in the third mesh buffer. For example, in Figure 2, after overwriting the stable mesh buffer 211 with the mesh in the blending mesh buffer 212 and overwriting the blending mesh buffer 212 with the mesh in the pending mesh buffer 213, in response to detecting another update trigger, the depth map generator, again overwrites the stable mesh buffer 211 with the mesh in the blending mesh buffer 212 (which was once in the pending mesh buffer 213) and overwrites the blending mesh buffer 212 with the mesh in the pending mesh buffer 213 (which is an updated mesh based on received mesh data).

In various implementations, portions of the first mesh and/or the second mesh outside a user field-of-view are updated without detecting an update trigger. In various implementations, the method 300 further includes, in response to determining that a portion of the first mesh was not used in rendering the first depth map, updating the portion of the first mesh with a corresponding portion of the second mesh. In various implementations, the method 300 further includes, in response to determining that a portion of the first mesh was not used in rendering the first depth map and a portion of the second mesh was not used in rendering the second depth map, updating the portion of the first mesh and the portion of the second mesh with corresponding portions of a third mesh.

The blended depth map generated by the method 300 of Figure 3 can be further used in various processes. For example, in various implementations, the blended depth map is used to perform perspective correction of an image, transforming the image so as to appear to have been captured from a different location. In various implementations, the image is transformed to appear to have been captured from a location of a user's eyes. In various implementations, rather than transforming the images such that they appear to have been captured at the location of the user's eyes, the images are partially transformed such that they appear to have been captured at a location closer to the location of the user's eyes than the location of the scene camera in one or more dimensions of a three-dimensional coordinate system of the device.

In various implementations, the blended depth map is altered to reduce artifacts. For example, in various implementations, the blended depth map is smoothed so as to avoid holes in the transformed image. As another example, in various implementations, the blended depth map is clamped so as to reduce larger movements of the pixels during the transform. In various implementations, the blended depth map is made static such that dynamic objects do not contribute to the depth map. For example, in various implementations, the blended depth map is determined using the first mesh of the physical environment and the second mesh of the physical environment without dynamic objects.

Thus, in various implementations, the method 300 further includes, transforming the image of the environment based on the blended depth map and a difference between a first perspective of the image of the environment and a second perspective.

In various implementations, the blended depth map is used to render shadows or other virtual content over the image of the physical environment. Thus, in various implementations, the method 300 further includes, generating virtual content based on the blended depth map, compositing the virtual content with the image of the physical environment to generate a display image, and displaying the display image.

Whereas Figure 3 illustrates a method of generating a blended depth map based on a first mesh and a second mesh, in various implementations other map representations may be used to generate a blended depth map, such as volumetric maps or keyframes.

Figure 4 is a block diagram of an example of the controller 110 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the controller 110 includes one or more processing units 402 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 406, one or more communication interfaces 408 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 410, a memory 420, and one or more communication buses 404 for interconnecting these and various other components.

In some implementations, the one or more communication buses 404 include circuitry that interconnects and controls communications between system components. In some implementations, the one or more I/O devices 406 include at least one of a keyboard, a mouse, a touchpad, a joystick, one or more microphones, one or more speakers, one or more image sensors, one or more displays, and/or the like.

The memory 420 includes high-speed random-access memory, such as dynamic random-access memory (DRAM), static random-access memory (SRAM), double-data-rate random-access memory (DDR RAM), or other random-access solid-state memory devices. In some implementations, the memory 420 includes non-volatile memory, such as one or more magnetic disk storage devices, optical disk storage devices, flash memory devices, or other non-volatile solid-state storage devices. The memory 420 optionally includes one or more storage devices remotely located from the one or more processing units 402. The memory 420 comprises a non-transitory computer readable storage medium. In some implementations, the memory 420 or the non-transitory computer readable storage medium of the memory 420 stores the following programs, modules and data structures, or a subset thereof including an optional operating system 430 and an XR experience module 440.

The operating system 430 includes procedures for handling various basic system services and for performing hardware dependent tasks. In some implementations, the XR experience module 440 is configured to manage and coordinate one or more XR experiences for one or more users (e.g., a single XR experience for one or more users, or multiple XR experiences for respective groups of one or more users). To that end, in various implementations, the XR experience module 440 includes a data obtaining unit 442, a tracking unit 444, a coordination unit 446, and a data transmitting unit 448.

In some implementations, the data obtaining unit 442 is configured to obtain data (e.g., presentation data, interaction data, sensor data, location data, etc.) from at least the electronic device 120 of Figure 1. To that end, in various implementations, the data obtaining unit 442 includes instructions and/or logic therefor, and heuristics and metadata therefor.

In some implementations, the tracking unit 444 is configured to map the physical environment 105 and to track the position/location of at least the electronic device 120 with respect to the physical environment 105 of Figure 1. To that end, in various implementations, the tracking unit 444 includes instructions and/or logic therefor, and heuristics and metadata therefor.

In some implementations, the coordination unit 446 is configured to manage and coordinate the XR experience presented to the user by the electronic device 120. To that end, in various implementations, the coordination unit 446 includes instructions and/or logic therefor, and heuristics and metadata therefor.

In some implementations, the data transmitting unit 448 is configured to transmit data (e.g., presentation data, location data, etc.) to at least the electronic device 120. To that end, in various implementations, the data transmitting unit 448 includes instructions and/or logic therefor, and heuristics and metadata therefor.

Although the data obtaining unit 442, the tracking unit 444, the coordination unit 446, and the data transmitting unit 448 are shown as residing on a single device (e.g., the controller 110), it should be understood that in other implementations, any combination of the data obtaining unit 442, the tracking unit 444, the coordination unit 446, and the data transmitting unit 448 may be located in separate computing devices.

Moreover, Figure 4 is intended more as functional description of the various features that may be present in a particular implementation as opposed to a structural schematic of the implementations described herein. As recognized by those of ordinary skill in the art, items shown separately could be combined and some items could be separated. For example, some functional modules shown separately in Figure 4 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 5 is a block diagram of an example of the electronic device 120 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the electronic device 120 includes one or more processing units 502 (e.g., microprocessors, ASICs, FPGAs, GPUs, CPUs, processing cores, and/or the like), one or more input/output (I/O) devices and sensors 506, one or more communication interfaces 508 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 510, one or more XR displays 512, one or more optional interior- and/or exterior-facing image sensors 514, a memory 520, and one or more communication buses 504 for interconnecting these and various other components.

In some implementations, the one or more communication buses 504 include circuitry that interconnects and controls communications between system components. In some implementations, the one or more I/O devices and sensors 506 include at least one of an inertial measurement unit (IMU), an accelerometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more XR displays 512 are configured to provide the XR experience to the user. In some implementations, the one or more XR displays 512 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more XR displays 512 correspond to diffractive, reflective, polarized, holographic, etc. waveguide displays. For example, the electronic device 120 includes a single XR display. In another example, the electronic device includes an XR display for each eye of the user. In some implementations, the one or more XR displays 512 are capable of presenting MR and VR content.

In some implementations, the one or more image sensors 514 are configured to obtain image data that corresponds to at least a portion of the face of the user that includes the eyes of the user (any may be referred to as an eye-tracking camera). In some implementations, the one or more image sensors 514 are configured to be forward-facing so as to obtain image data that corresponds to the physical environment as would be viewed by the user if the electronic device 120 was not present (and may be referred to as a scene camera). The one or more optional image sensors 514 can include one or more RGB cameras (e.g., with a complimentary metal-oxide-semiconductor (CMOS) image sensor or a charge-coupled device (CCD) image sensor), one or more infrared (IR) cameras, one or more event-based cameras, and/or the like.

The memory 520 includes high-speed random-access memory, such as DRAM, SRAM, DDR RAM, or other random-access solid-state memory devices. In some implementations, the memory 520 includes non-volatile memory, such as one or more magnetic disk storage devices, optical disk storage devices, flash memory devices, or other non-volatile solid-state storage devices. The memory 520 optionally includes one or more storage devices remotely located from the one or more processing units 502. The memory 520 comprises a non-transitory computer readable storage medium. In some implementations, the memory 520 or the non-transitory computer readable storage medium of the memory 520 stores the following programs, modules and data structures, or a subset thereof including an optional operating system 530 and an XR presentation module 540.

The operating system 530 includes procedures for handling various basic system services and for performing hardware dependent tasks. In some implementations, the XR presentation module 540 is configured to present XR content to the user via the one or more XR displays 512. To that end, in various implementations, the XR presentation module 540 includes a data obtaining unit 542, a depth map generating unit 544, an XR presenting unit 546, and a data transmitting unit 548.

In some implementations, the data obtaining unit 542 is configured to obtain data (e.g., presentation data, interaction data, sensor data, location data, etc.) from at least the controller 110 of Figure 1. To that end, in various implementations, the data obtaining unit 542 includes instructions and/or logic therefor, and heuristics and metadata therefor.

In some implementations, the depth map generating unit 544 is configured to generate a depth map by blending a plurality of depth maps corresponding to different times. To that end, in various implementations, the depth map generating unit 544 includes instructions and/or logic therefor, and heuristics and metadata therefor.

In some implementations, the XR presenting unit 546 is configured to display the transformed image via the one or more XR displays 512. To that end, in various implementations, the XR presenting unit 546 includes instructions and/or logic therefor, and heuristics and metadata therefor.

In some implementations, the data transmitting unit 548 is configured to transmit data (e.g., presentation data, location data, etc.) to at least the controller 110. In some implementations, the data transmitting unit 548 is configured to transmit authentication credentials to the electronic device. To that end, in various implementations, the data transmitting unit 548 includes instructions and/or logic therefor, and heuristics and metadata therefor.

Although the data obtaining unit 542, the depth map generating unit 544, the XR presenting unit 546, and the data transmitting unit 548 are shown as residing on a single device (e.g., the electronic device 120), it should be understood that in other implementations, any combination of the data obtaining unit 542, the depth map generating unit 544, the XR presenting unit 546, and the data transmitting unit 548 may be located in separate computing devices.

Moreover, Figure 5 is intended more as a functional description of the various features that could be present in a particular implementation as opposed to a structural schematic of the implementations described herein. As recognized by those of ordinary skill in the art, items shown separately could be combined and some items could be separated. For example, some functional modules shown separately in Figure 5 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

**Claims**

1. A method comprising:
   at a device including one or more processors and non-transitory memory:

   storing, in a first buffer, a first mesh of a physical environment and, in a second buffer, a second mesh of the physical environment associated with a timestamp;
   rendering a first depth map based on the first mesh and camera extrinsics of an image of the physical environment and a second depth map based on the second mesh and the camera extrinsics of the image of the physical environment; and
   generating a blended depth map based on the first depth map, the second depth map, and a difference between a time of the image of the physical environment and the timestamp.

2. The method of claim 1, wherein generating the blended depth map includes generating a weighted sum of an inverse of the first depth map and an inverse of the second depth map, wherein a weighting factor of the weighted sum applied to the inverse of the second depth map is proportional to the difference between the time of the image of the physical environment and the timestamp.

3. The method of claim 1 or 2, further comprising, in response to detecting an update trigger, overwriting the first mesh buffer with the second mesh and overwriting the second mesh buffer with a third mesh stored in a third mesh buffer.

4. The method of claim 3, wherein the update trigger includes a temporal trigger detected when a threshold amount of time has elapsed since an initialization or a most recent update trigger.

5. The method of claim 3 or 4, wherein the update trigger includes a motion-based trigger detected based on motion of the device.

6. The method of any of claims 3-5, wherein the update trigger includes an eye-based trigger detected based on an eye characteristic of a user.

7. The method of any of claims 3-6, wherein the update trigger includes a content-based trigger detected based on virtual content displayed by the device.

8. The method of any of claims 3-7, further comprising, in response to determining that the third mesh has changed more than a threshold amount after the update trigger, suppressing a subsequent update trigger for a particular amount of time.

9. The method of any of claims 3-8, further comprising updating the third mesh buffer in response to receiving mesh data.

10. The method of any of claims 3-9, further comprising, in response to detecting a subsequent update trigger, overwriting the first mesh buffer with the third mesh and overwriting the second mesh buffer with a fourth mesh stored in the third mesh buffer.

11. The method of any of claims 1-10, further comprising, in response to determining that a portion of the first mesh was not used in rendering the first depth map, updating the portion of the first mesh with a corresponding portion of the second mesh.

12. The method of any of claims 1-11, further comprising, in response to determining that a portion of the first mesh was not used in rendering the first depth map and a portion of the second mesh was not used in rendering the second depth map, updating the portion of the first mesh and the portion of the second mesh with corresponding portions of a third mesh.

13. The method of any of claims 1-12, further comprising transforming the image of the environment based on the blended depth map and a difference between a first perspective of the image of the environment and a second perspective.

14. A device comprising:

a non-transitory memory; and
one or more processors to:

obtain a first mesh of a physical environment and a second mesh of the physical environment associated with a timestamp; render a first depth map based on the first mesh and camera extrinsics of an image of the physical environment and a second depth map based on the second mesh and the camera extrinsics of the image of the physical environment; and generate a blended depth map based on the first depth map, the second depth map, and a difference between a time of the image of the physical environment and the timestamp.

15. A non-transitory memory storing one or more programs, which, when executed by one or more processors of a device, cause the device to perform any of the methods of claims 1-13.

**Patentansprüche**

1. Verfahren, umfassend:
auf einer Vorrichtung, einschließlich eines oder mehrerer Prozessoren und eines nichtflüchtigen Speichers:

Speichern, in einem ersten Puffer, eines ersten Netzes einer physischen Umgebung und, in einem zweiten Puffer, eines zweiten Netzes der physischen Umgebung, das einem Zeitstempel zugeordnet ist;
Rendern einer ersten Tiefenkarte basierend auf dem ersten Netz und einer Kameraextrinsik eines Bilds der physischen Umgebung und einer zweiten Tiefenkarte basierend auf dem zweiten Netz und der Kameraextrinsik des Bilds der physischen Umgebung; und
Erzeugen einer gemischten Tiefenkarte basierend auf der ersten Tiefenkarte, der zweiten Tiefenkarte und einer Differenz zwischen einer Zeit des Bilds der physischen Umgebung und dem Zeitstempel.

2. Verfahren nach Anspruch 1, wobei das Erzeugen der gemischten Tiefenkarte das Erzeugen einer gewichteten Summe aus einer Inversen der ersten Tiefenkarte und einer Inversen der zweiten Tiefenkarte einschließt, wobei ein Gewichtungsfaktor der gewichteten Summe, der auf die Inverse der zweiten Tiefenkarte angewendet wird, proportional zu der Differenz zwischen der Zeit des Bilds der physischen Umgebung und dem Zeitstempel ist.

3. Verfahren nach Anspruch 1 oder 2, ferner umfassend, als Reaktion auf ein Erkennen eines Aktualisierungsauslösers, ein Überschreiben des ersten Netzpuffers mit dem zweiten Netz und das Überschreiben des zweiten Netzpuffers mit einem dritten Netz, das in einem dritten Netzpuffer gespeichert ist.

4. Verfahren nach Anspruch 3, wobei der Aktualisierungsauslöser einen zeitlichen Auslöser einschließt, der erkannt wird, wenn seit einer Initialisierung oder einem letzten Aktualisierungsauslöser eine Schwellenmenge an Zeit verstrichen ist.

5. Verfahren nach Anspruch 3 oder 4, wobei der Aktualisierungsauslöser einen bewegungsbasierten Auslöser einschließt, der basierend auf einer Bewegung der Vorrichtung erkannt wird.

6. Verfahren nach einem der Ansprüche 3 bis 5, wobei der Aktualisierungsauslöser einen augenbasierten Auslöser einschließt, der basierend auf einer Augeneigenschaft eines Benutzers erkannt wird.

7. Verfahren nach einem der Ansprüche 3 bis 6, wobei der Aktualisierungsauslöser einen inhaltsbasierten Auslöser einschließt, der basierend auf einem virtuellen Inhalt, der durch die Vorrichtung angezeigt wird, erkannt wird.

8. Verfahren nach einem der Ansprüche 3 bis 7, ferner umfassend, als Reaktion auf ein Bestimmen, dass sich das dritte Netz nach dem Aktualisierungsauslöser um mehr als eine Schwellenmenge geändert hat, ein Unterdrücken eines nachfolgenden Aktualisierungsauslösers für eine spezielle Menge an Zeit.

9. Verfahren nach einem der Ansprüche 3 bis 8, ferner umfassend ein Aktualisieren des dritten Netzpuffers als Reaktion auf ein Empfangen von Netzdaten.

10. Verfahren nach einem der Ansprüche 3 bis 9, ferner umfassend, als Reaktion auf das Erkennen eines nachfolgenden Aktualisierungsauslösers, das Überschreiben des ersten Netzpuffers mit dem dritten Netz und das Überschreiben des zweiten Netzpuffers mit einem vierten Netz, das in dem dritten Netzpuffer gespeichert ist.

11. Verfahren nach einem der Ansprüche 1 bis 10, ferner umfassend, als Reaktion auf das Bestimmen, dass ein Teil des ersten Netzes bei dem Rendern der ersten Tiefenkarte nicht verwendet wurde, das Aktualisieren des Teils des ersten Netzes mit einem entsprechenden Teil des zweiten Netzes.

12. Verfahren nach einem der Ansprüche 1 bis 11, ferner umfassend, als Reaktion auf das Bestimmen, dass ein Teil des ersten Netzes bei dem Rendern der ersten Tiefenkarte nicht verwendet wurde und ein Teil des zweiten Netzes bei dem Rendern der zweiten Tiefenkarte nicht verwendet wurde, das Aktualisieren des Teils des ersten Netzes und des Teils des zweiten Netzes mit entsprechenden Teilen eines dritten Netzes.

13. Verfahren nach einem der Ansprüche 1 bis 12, ferner umfassend ein Transformieren des Bilds der Umgebung basierend auf der gemischten Tiefenkarte und einer Differenz zwischen einer ersten Perspektive des Bilds der Umgebung und einer zweiten Perspektive.

14. Vorrichtung, umfassend:

einen nichtflüchtigen Speicher; und
einen oder mehrere Prozessoren zum:

Erhalten eines ersten Netzes einer physischen Umgebung und eines zweiten Netzes der physischen Umgebung, das einem Zeitstempel zugeordnet ist;
Rendern einer ersten Tiefenkarte basierend auf dem ersten Netz und der Kameraextrinsik eines Bilds der physischen Umgebung und einer zweiten Tiefenkarte basierend auf dem zweiten Netz und der Kameraextrinsik des Bilds der physischen Umgebung; und
Erzeugen einer gemischten Tiefenkarte basierend auf der ersten Tiefenkarte, der zweiten Tiefenkarte und einer Differenz zwischen einer Zeit des Bilds der physischen Umgebung und dem Zeitstempel.

15. Nichtflüchtiger Speicher, der ein oder mehrere Programme speichert, die, wenn sie durch einen oder mehrere Prozessoren einer Vorrichtung ausgeführt werden, die Vorrichtung veranlassen, eines der Verfahren nach den Ansprüchen 1 bis 13 durchzuführen.

**Revendications**

1. Procédé comprenant :
au niveau d'un dispositif comportant un ou plusieurs processeurs et de la mémoire non transitoire :

le stockage, dans un premier tampon, d'un premier maillage d'un environnement physique et, dans un second tampon, d'un deuxième maillage de l'environnement physique associé à un horodatage ;
la restitution d'une première carte de profondeur en fonction du premier maillage et d'éléments extrinsèques de caméra d'une image de l'environnement physique et d'une seconde carte de profondeur en fonction du deuxième maillage et des éléments extrinsèques de caméra de l'image de l'environnement physique ; et
la génération d'une carte de profondeur mélangée en fonction de la première carte de profondeur, de la seconde carte de profondeur et d'une différence entre un moment de l'image de l'environnement physique et l'horodatage.

2. Procédé selon la revendication 1, dans lequel la génération de la carte de profondeur mélangée comporte la génération d'une somme pondérée d'un inverse de la première carte de profondeur et d'un inverse de la seconde carte de profondeur, dans lequel un facteur de pondération de la somme pondérée appliqué à l'inverse de la seconde carte de profondeur est proportionnel à la différence entre le moment de l'image de l'environnement physique et l'horodatage.

3. Procédé selon la revendication 1 ou 2, comprenant en outre, en réponse à la détection d'un déclencheur de mise à jour, l'écrasement du tampon de premier maillage par le deuxième maillage et l'écrasement du tampon de deuxième maillage par un troisième maillage stocké dans un tampon de troisième maillage.

4. Procédé selon la revendication 3, dans lequel le déclencheur de mise à jour comporte un déclencheur temporel détecté lorsqu'une quantité seuil de temps s'est écoulée depuis une initialisation ou un déclencheur de mise à jour le plus récent.

5. Procédé selon la revendication 3 ou 4, dans lequel le déclencheur de mise à jour comporte un déclencheur basé sur le mouvement détecté en fonction d'un mouvement du dispositif.

6. Procédé selon l'une quelconque des revendications 3 à 5, dans lequel le déclencheur de mise à jour comporte un déclencheur oculaire détecté en fonction d'une caractéristique oculaire d'un utilisateur.

7. Procédé selon l'une quelconque des revendications 3 à 6, dans lequel le déclencheur de mise à jour comporte un déclencheur basé sur le contenu détecté en fonction d'un contenu virtuel affiché par le dispositif.

8. Procédé selon l'une quelconque des revendications 3 à 7, comprenant en outre, en réponse à la détermination que le troisième maillage a changé de plus d'une quantité seuil après le déclencheur de mise à jour, la suppression d'un déclencheur de mise à jour ultérieur pendant une durée particulière.

9. Procédé selon l'une quelconque des revendications 3 à 8, comprenant en outre la mise à jour du tampon de troisième maillage en réponse à la réception de données de maillage.

10. Procédé selon l'une quelconque des revendications 3 à 9, comprenant en outre, en réponse à la détection d'un déclencheur de mise à jour ultérieur, l'écrasement du tampon de premier maillage par le troisième maillage et l'écrasement du tampon de deuxième maillage par un quatrième maillage stocké dans le tampon de troisième maillage.

11. Procédé selon l'une quelconque des revendications 1 à 10, comprenant en outre, en réponse à la détermination qu'une partie du premier maillage n'a pas été utilisée pour la restitution de la première carte de profondeur, la mise à jour de la partie du premier maillage avec une partie correspondante du deuxième maillage.

12. Procédé selon l'une quelconque des revendications 1 à 11, comprenant en outre, en réponse à la détermination qu'une partie du premier maillage n'a pas été utilisée pour la restitution de la première carte de profondeur et qu'une partie du deuxième maillage n'a pas été utilisée pour la restitution de la seconde carte de profondeur, la mise à jour de la partie du premier maillage et de la partie du deuxième maillage avec des parties correspondantes d'un troisième maillage.

13. Procédé selon l'une quelconque des revendications 1 à 12, comprenant en outre la transformation de l'image de l'environnement en fonction de la carte de profondeur mélangée et d'une différence entre une première perspective de l'image de l'environnement et une seconde perspective.

14. Dispositif comprenant :

une mémoire non transitoire ; et
un ou plusieurs processeurs pour :

obtenir un premier maillage d'un environnement physique et un deuxième maillage de l'environnement physique associé à un horodatage ;
restituer une première carte de profondeur en fonction du premier maillage et d'éléments extrinsèques de caméra d'une image de l'environnement physique et d'une seconde carte de profondeur en fonction du deuxième maillage et des éléments extrinsèques de caméra de l'image de l'environnement physique ; et
générer une carte de profondeur mélangée en fonction de la première carte de profondeur, de la seconde carte de profondeur et d'une différence entre un moment de l'image de l'environnement physique et l'horodatage.

**15.** Mémoire non transitoire stockant un ou plusieurs programmes, qui, lorsqu'ils sont exécutés par un ou plusieurs processeurs d'un dispositif, amènent le dispositif à mettre en œuvre l'un quelconque des procédés selon les revendications 1 à 13.

**Figure 1**

EP 4 414 814 B1

**Depth Map Generator <u>200</u>**

Mesh Data → Pending Mesh Buffer (213) → Blending Mesh Buffer (212) → Stable Mesh Buffer (211)

Blending Mesh Buffer (212) → Renderer (220) ← Camera Extrinsics

Stable Mesh Buffer (211) → Renderer (220)

Renderer (220) → Blending Depth Map Buffer (232)

Renderer (220) → Stable Depth Map Buffer (231)

Blending Depth Map Buffer (232) → Blender (240)

Stable Depth Map Buffer (231) → Blender (240)

Blender (240) → Blended Depth Map

# Figure 2

<u>300</u>

At a device including one or more processors and non-transitory memory:

Storing a first mesh of a physical environment in a first mesh buffer and a second mesh of the physical environment in a second mesh buffer

310

Rendering a first depth map for an image of the physical environment based on the first mesh and a second depth map for the image of the physical environment based on the second mesh

320

Generating a blended depth map based on the first depth map, the second depth map, and a difference between a time of the image of the physical environment and a time of the second mesh

330

# Figure 3

Controller 110

Figure 4

EP 4 414 814 B1

Electronic Device 120

Processing Unit(s) 502

Comm. Interface(s) 508

XR Display(s) 512

704

I/O Devices & Sensors 506

Programming Interface(s) 510

Image Sensor(s) 514

Memory 520

Operating System 530

XR Presentation Module 540

Data Obtaining Unit 542

Depth Map Generating Unit 544

XR Presenting Unit 546

Data Transmitting Unit 548

**Figure 5**

EP 4 414 814 B1

18

**EP 4 414 814 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021358084 A1